(19) Europäisches Patentamt / European Patent Office / Office européen des brevets

(11) **EP 3 167 544 B1**

(12) **EUROPÄISCHE PATENTSCHRIFT**

(45) Veröffentlichungstag und Bekanntmachung des Hinweises auf die Patenterteilung:
**21.10.2020   Patentblatt 2020/43**

(21) Anmeldenummer: **15727975.3**

(22) Anmeldetag: **09.06.2015**

(51) Int Cl.:
*H02P 21/00* *(2016.01)*   *H02M 1/00* *(2006.01)*

(86) Internationale Anmeldenummer:
**PCT/EP2015/062813**

(87) Internationale Veröffentlichungsnummer:
**WO 2016/005129 (14.01.2016 Gazette 2016/02)**

(54) **VEFAHREN UND VORRICHTUNG ZUR STEUERUNG EINES BETRIEBS EINES ELEKTROMOTORS**

METHOD AND APPARATUS FOR CONTROLLING OPERATION OF AN ELECTRIC MOTOR

PROCÉDÉ ET DISPOSITIF DE COMMANDE DU FONCTIONNEMENT D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2014   DE 102014213199**

(43) Veröffentlichungstag der Anmeldung:
**17.05.2017   Patentblatt 2017/20**

(73) Patentinhaber: **Conti Temic microelectronic GmbH**
**90411 Nürnberg (DE)**

(72) Erfinder:
• **HINZE, Patrick**
**90610 Winkelhaid (DE)**
• **SCHULZE, Andreas**
**91207 Lauf a. d. Peg. / OT Neunhof (DE)**
• **PEUCKERT, Matthias**
**93047 Regensburg (DE)**

(74) Vertreter: **Bonn, Roman Klemens**
**Continental Automotive GmbH**
**Patente und Lizenzen**
**Postfach 22 16 39**
**80506 München (DE)**

(56) Entgegenhaltungen:
**EP-A2- 1 981 164       US-A- 5 519 301**
**US-A1- 2008 265 829   US-A1- 2013 158 808**

**Beschreibung**

Die Erfindung betrifft ein Verfahren und eine Vorrichtung zur Steuerung eines Betriebs eines Elektromotors, insbesondere im Umfeld oder in einer Applikation für ein Fahrzeuggetriebe.

Elektromechanisch oder hydraulisch betätigte Fahrzeuggetriebe umfassen einen oder mehrere Elektromotoren für Pumpen- oder Direktantriebe, wobei mittels des zumindest einen Elektromotors Wähl- oder Schaltvorrichtungen sowie Kupplungs- und Bremsvorrichtungen des Fahrzeuggetriebes angesteuert werden.

Aus dem Stand der Technik sind verschiedene Verfahren zur Steuerung solcher Elektromotoren für Fahrzeuggetriebe bekannt. Eine Stromzufuhr zu einzelnen Motorwicklungen der Elektromotoren wird insbesondere aus Kostengründen mittels einer so genannten Blockkommutierung und einer so genannten B6-Brückenschaltung gesteuert. Hierbei werden innerhalb eines Kommutierungsschrittes ein so genannter High-Side-Schalter einer Halbbrücke der Brückenschaltung und ein so genannter Low-Side-Schalter der Halbbrücke geschaltet. Der Kommutierungsschritt wird in Abhängigkeit einer Rotorposition des Elektromotors gesteuert, wobei zur Ermittlung der Rotorposition beispielsweise im Elektromotor Hall-Sensoren vorgesehen sind. Die Hall-Sensoren sind derart angeordnet, dass über die High-Low-Logikpegel eine elektrische Winkelauflösung von 60° realisiert ist.

Um diese Winkelauflösung zu erhöhen, ist es bekannt, hochauflösende Winkelsensoren zu verwenden. Somit ist eine bessere Anpassung der an die elektrischen Phasen des Elektromotors ausgegebenen Spannungen an eine jeweilige Rotorposition möglich. Eine dabei realisierte so genannte Sinuskommutierung ermöglicht eine höhere Ausnutzung des Wirkungsgrades des Elektromotors bei gleichzeitig ruhigem Motorlauf.Hierbei wird die elektrische Spannung in Abhängigkeit einer Information über einen Rotorwinkel mittels einer Raumzeigermodulation derart erzeugt, dass diese sinusförmig ist.

Zur weiteren Erhöhung des Wirkungsgrades des Elektromotors bei einer Sinuskommutierung ist bekannt, dass ein Strommaximum in den Motorwicklungen zur Position von Magneten des Rotors derart synchronisiert wird, dass ein fester Versatz von 90° entsteht. Hierzu wird eine so genannte feldorientierte Regelung verwendet, bei welcher Phasenströme des Elektromotors in Verbindung mit der Information über die Rotorposition zur Regelung der ausgegebenen Phasenspannungen verwendet werden.

Verfahren und Vorrichtungen zur Steuerung eines Betriebs eines Elektromotors werden beispielsweise in US 2008/265829 A1, US 5 519 301 A, US 2013/0158808 A1 und EP 1 981 164 A2 beschrieben.

Der Erfindung liegt die Aufgabe zu Grunde, ein gegenüber dem Stand der Technik verbessertes Verfahren und eine verbesserte Vorrichtung zur Steuerung eines Betriebs eines Elektromotors, insbesondere im Umfeld oder in einer Applikation für ein Fahrzeuggetriebe, anzugeben.

Hinsichtlich des Verfahrens wird die Aufgabe erfindungsgemäß durch die im Anspruch 1 angegebenen Merkmale und hinsichtlich der Vorrichtung durch die in Anspruch 7 angegebenen Merkmale gelöst.

Vorteilhafte Ausgestaltungen der Erfindung sind Gegenstand der Unteransprüche.

In dem erfindungsgemäßen Verfahren zur Steuerung eines Betriebs eines Elektromotors, insbesondere im Umfeld oder in einer Applikation für ein Fahrzeuggetriebe, werden in einer Modulation an elektrischen Phasen des Elektromotors anliegende elektrische Spannungen in Abhängigkeit einer Rotorposition des Elektromotors, in Abhängigkeit eines in einem Regelkreis mit eines Drehzahlreglers durchgeführten Soll-Ist-Vergleichs einer Drehzahl des Elektromotors und in Abhängigkeit eines in einem dem Drehzahlregler unterlagerten Stromregler durchgeführten Soll-Ist-Vergleichs eines an einer elektrischen Versorgungseinheit des Elektromotors gemessenen Summenstromes erzeugt und gesteuert ausgegeben, wobei ein Sollwert am Eingang des Stromreglers durch Multiplikation eines aktuellen Tastgrades der Modulation mit einer am Ausgang des Drehzahlreglers anliegenden und als äquivalenter Phasenstrom des Elektromotors ausgebildeten ersten Stellgröße gebildet wird, wobei die erste Stellgröße des Drehzahlreglers im unterlagerten Stromregler aufgrund der mittels eines am Ausgang des Drehzahlreglers angeordneten Multiplikators durchgeführten Multiplikation mit dem aktuellen Tastgrad zu einem äquivalenten Phasenstrom des Elektromotors wird. Der äquivalente Phasenstrom ist ein Effektivwert des Phasenstroms.

Die erfindungsgemäße Lösung ermöglicht einen Betrieb des Elektromotors an einer Gleichstromgrenze eines Steuergeräts zur Steuerung des Elektromotors, an einer Phasenstromgrenze des Elektromotors oder einer Ansteuerelektronik oder einer Stromgrenze eines elektrischen Netzes, insbesondere eines Bordnetzes eines Fahrzeugs, in welchem der Elektromotor angeordnet ist. Hierbei sind beliebige Drehzahlanforderungen an den Elektromotor von einer übergeordneten Stelle möglich, ohne das Erfordernis einer besonderen Beachtung von Arbeitspunkten. Das Verfahren regelt in einfacher Weise eine maximal mögliche Drehzahl des Elektromotors in Abhängigkeit eines zur Verfügung stehenden elektrischen Stroms und ermöglicht eine unabhängige Motorphasenstrom- und/oder Gleichstrombegrenzung mittels einfacher Summenstrommessung. Weiterhin ist es aufgrund der Verwendung des Summenstroms als Sollwert am Eingang des Stromreglers in besonderer Weise möglich, den besonders einfach und zuverlässig durch Messung an der Versorgungseinheit zu ermittelnden Summenstrom als Regelgröße zu verwenden. Durch die somit erhaltene Phasenstrominformation sind betriebspunktabhängige Vorsteuerwinkel zu einer Wirkungsgradoptimierung des Elektromotors ohne das Erfordernis einer kostenintensiven Phasenstromrückmessung bestmöglich einstellbar.

Dabei wird der Tastgrad in einer Division einer am Ausgang eines Stromreglers des Stromregelkreises anliegenden zweiten Stellgröße durch eine maximal an der Versorgungseinheit zur Verfügung stehenden Zwischenkreisspannung gebildet. Diese Ermittlung ist besonders einfach realisierbar und zeichnet sich aufgrund einer Kompensation von Schwankungen der Spannungsversorgung durch eine hohe Zuverlässigkeit aus.

In einer weiteren möglichen Ausgestaltung des Verfahrens wird als zweite Stellgröße mittels des Stromreglers eine äquivalente Spannungsamplitude des Elektromotors erzeugt, so dass der Tastgrad in einfacher Weise mittels Division der äquivalenten Motorspannung durch die Zwischenkreisspannung erzeugt werden kann.

Eine Weiterbildung sieht vor, dass die erste Stellgröße vor der Multiplikation mit dem Tastgrad der Modulation limitiert wird. Somit ist in einfacher Weise der äquivalente Effektivwert des Motorphasenstroms begrenzbar.

Eine mögliche weitere Weiterbildung sieht vor, dass der Summenstrom limitiert wird. Insbesondere erfolgt die Limitierung des Summenstromsollwerts vor der Multiplikation des aktuellen Tastgrades der Modulation mit der am Ausgang des Drehzahlreglers anliegenden ersten Stellgröße durch Umrechnung eines Summenstromlimits in ein äquivalentes Phasenstromlimit mittels Division mit dem aktuellen Tastgrad der Modulation. Somit ist der aufgenommene Summenstrom einer elektrischen Versorgungseinheit des Elektromotors in einfacher Weise begrenzbar.

Um eine sehr hohe Winkelauflösung und daraus folgend bei hoher Ausnutzung des Wirkungsgrades des Elektromotors einen sehr ruhigen Motorlauf zu realisieren, werden die Spannungen in einer möglichen Ausgestaltung des Verfahrens in Abhängigkeit eines eine Rotorposition des Elektromotors kennzeichnenden Rotorlagewinkels in einer Raumzeigermodulation ermittelt.

Die erfindungsgemäße Vorrichtung zur Steuerung eines Betriebs eines Elektromotors umfasst eine elektrische Versorgungseinheit zur gesteuerten Ausgabe von elektrischen Spannungen an elektrischen Phasen des Elektromotors, wobei die Versorgungseinheit mit zumindest einer Erfassungseinheit zur Erfassung einer Rotorposition des Elektromotors und zumindest einem in einem Regelkreis angeordneten Drehzahlregler zur Durchführung eines Soll-Ist-Vergleichs einer Drehzahl des Elektromotors gekoppelt ist. Dem Drehzahlregler ist ein Stromregler zur Durchführung eines Soll-Ist-Vergleichs eines an der Versorgungseinheit gemessenen Summenstromes unterlagert, wobei am Ausgang des Drehzahlreglers ein Multiplikator angeordnet ist, mittels welchem ein Sollwert am Eingang des Stromreglers durch Multiplikation eines aktuellen Tastgrades der Modulation mit einer am Ausgang des Drehzahlreglers anliegenden und als äquivalenter Phasenstrom des Elektromotors ausgebildeten ersten Stellgröße erzeugbar ist, so dass die erste Stellgröße des Drehzahlreglers im unterlagerten Stromregler aufgrund der mittels des Multiplikators durchgeführten Multiplikation mit dem aktuellen Tastgrad zu einem äquivalenten Phasenstromeffektivwert des Elektromotors wird.

Mittels der erfindungsgemäßen Vorrichtung ist in einfacher Weise eine maximal mögliche Drehzahl des Elektromotors in Abhängigkeit eines zur Verfügung stehenden elektrischen Stroms regelbar. Dabei ermöglicht die Vorrichtung eine unabhängige Motorphasenstrom- und/oder Gleichstrombegrenzung mittels einfacher Summenstrommessung einer elektrischen Versorgungseinheit, beispielsweise einer als B6-Brücke ausgebildeten Endstufe, und zeichnet sich durch eine besonders einfache und kostengünstige Struktur bei besonders geringen erforderlichen Rechenleistungen aus. Auch ist die Vorrichtung gegenüber aus dem Stand der Technik bekannten feldorientierten Regelungen einfach und kostengünstig ohne bauraum- und kostenintensive Komponenten zur Phasenstromrückmessung ausgebildet. Weiterhin ist es aufgrund der Verwendung des Summenstroms als Sollwert am Eingang des Stromreglers in besonderer Weise möglich, den besonders einfach und zuverlässig durch Messung an der Versorgungseinheit zu ermittelnden Summenstrom als Regelgröße zu verwenden. Durch die somit erhaltene Phasenstrominformation sind betriebspunktabhängige Vorsteuerwinkel zu einer Wirkungsgradoptimierung des Elektromotors ohne das Erfordernis einer kostenintensiven Phasenstromrückmessung bestmöglich einstellbar.

Dabei ist am Ausgang des Stromreglers ein Teiler angeordnet, mittels welchem der Tastgrad durch Division einer am Ausgang des Stromreglers anliegenden zweiten Stellgröße durch eine maximal an der Versorgungseinheit zur Verfügung stehenden Zwischenkreisspannung erzeugbar ist. Der Teiler ermöglicht eine besonders einfach realisierbare Erzeugung des Tastgrades und zeichnet sich durch eine hohe Zuverlässigkeit aus, indem Schwankungen der Spannungsversorgung während einer Regelung des Elektromotors kompensiert werden können.

In einer möglichen Ausgestaltung ist die zweite Stellgröße eine äquivalente Spannungsamplitude des Elektromotors. Somit ist der Tastgrad in einfacher Weise mittels Division der äquivalenten Motorspannung durch die Zwischenkreisspannung erzeugbar.

In einer weiteren möglichen Ausgestaltung der Vorrichtung umfasst die Versorgungseinheit eine Brückenschaltung, beispielsweise eine B6-Brückenschaltung, mittels welcher in sehr einfacher und zuverlässiger Weise eine Blockkommutierung des Elektromotors realisierbar ist.

Ausführungsbeispiele der Erfindung werden im Folgenden anhand von Zeichnungen näher erläutert.

Darin zeigen:

Figur 1     schematisch ein Blockschaltbild eines ersten Ausführungsbeispiels eines Regelkreises zur Ansteuerung eines Elektromotors,

Figur 2    schematisch ein Blockschaltbild eines zweiten Ausführungsbeispiels eines Regelkreises zur Ansteuerung eines Elektromotors,

Figur 3    schematisch ein Flussdiagramm eines erfindungsgemäßen Verfahrens mit detaillierter Darstellung einer Limitierung einer ersten Stellgröße eines Drehzahlreglers des Regelkreises gemäß Figur 1 oder 2,

Figur 4    schematisch ein Flussdiagramm eines erfindungsgemäßen Verfahrens mit detaillierter Darstellung einer Limitierung einer ersten Stellgröße eines Drehzahlreglers und einer Limitierung eines Sollwerts eines Summenstromes des Regelkreises gemäß Figur 1 oder 2, und

Figur 5    schematisch ein Flussdiagramm eines erfindungsgemäßen Verfahrens mit detaillierter Darstellung einer Erzeugung eines Tastgrades einer Modulation.

Einander entsprechende Teile sind in allen Figuren mit den gleichen Bezugszeichen versehen.

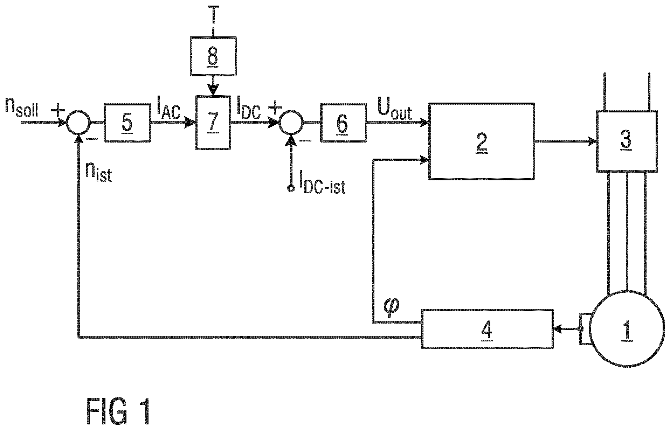

Figur 1 zeigt in einem Blockschaltbild ein mögliches erstes Ausführungsbeispiel eines Regelkreises zur Ansteuerung eines Elektromotors 1.

Hierbei wird im Rahmen einer Block- oder Sinuskommutierung eine Stromzufuhr zu einzelnen Motorwicklungen des Elektromotors 1 mittels einer Steuereinheit 2 durch Steuerung einer B6-Brücke 3 gesteuert, wobei in nicht näher dargestellter Weise innerhalb eines Kommutierungsschrittes zur Pulsweitenmodulation zumindest ein High-Side-Schalter einer Halbbrücke der B6-Brücke 3 und zumindest ein Low-Side-Schalter der Halbbrücke geschaltet werden: Der Kommutierungsschritt wird dabei in Abhängigkeit einer Rotorposition des Elektromotors 1 gesteuert.

Mittels einer Erfassungseinheit 4 wird weiterhin eine Ist-Drehzahl nist des Elektromotors 1 ermittelt und zurückgeführt, wobei in einer Multiplikation in Abhängigkeit einer Soll-Drehzahl $n_{soll}$ des Elektromotors 1 ein äquivalenter Phasenstromeffektivwert des Elektromotors 1 als erste Stellgröße $I_{AC}$ erzeugt wird.

Weiterhin wird mittels der Erfassungseinheit 4 ein eine Rotorposition des Elektromotors 1 kennzeichnender Rotorlagewinkel φ ermittelt, welcher der Steuereinheit 2 zur Raumzeigermodulation zugeführt wird, welche aus einer Amplitude eines Spannungszeigers, der aus einer zweiten Stellgröße eines dem Drehzahlregler 5 unterlagerten Stromreglers 6 gebildet wird, und dem Rotorlagewinkel φ ein Ansteuersignal für die B6-Brücke 3 generiert.

Das heißt, zur Steuerung des Betriebs des Elektromotors 1 werden in einer Modulation an elektrischen Phasen des Elektromotors 1 anliegende elektrische Spannungen in Abhängigkeit der Rotorposition des Elektromotors 1, in Abhängigkeit eines mittels des Drehzahlreglers 5 durchgeführten Vergleichs der Ist-Drehzahl $n_{ist}$ mit einer Soll-Drehzahl $n_{soll}$ des Elektromotors 1 und in Abhängigkeit eines mittels des unterlagerten Stromreglers 6 durchgeführten Soll-Ist-Vergleichs eines an der elektrischen Versorgungseinheit des Elektromotors 1 gemessenen Summenstromes $I_{DC\_ist}$ erzeugt und gesteuert ausgegeben.

Ein Sollwert $I_{DC}$ am Eingang des Stromreglers 6 wird durch Multiplikation eines aktuellen Tastgrades T der Modulation mit der am Ausgang des Drehzahlreglers 5 anliegenden ersten Stellgröße $I_{AC}$ mittels eines am Ausgang des Drehzahlreglers 5 angeordneten Multiplikators 7 gemäß

$$\mathtt{I_{DC} \approx I_{AC} \cdot T \ (0 \dots 1)} \qquad\qquad (1)$$

gebildet, wobei der Tastgrad T dem Multiplikator 7 anhand einer Signalaufbereitungseinheit 8 zugeführt wird.

Auf diese Weise entsteht vor der Umrechnung mit dem Tastgrad T ein äquivalenter Phasenstrom des Elektromotors 1 und nach der Umrechnung am Eingang des Stromreglers 6 ein Sollwert $I_{DC}$ des Summenstroms. Diese beiden Größen können in einem Vergleich mit einstellbaren Maximalgrenzen limitiert werden.

Der somit als Summenstrom erzeugte Sollwert $I_{DC}$ wird mit dem Istwert des Summenstromes $I_{DC\_ist}$ verglichen, wobei der Stromregler 6 in Abhängigkeit dieses Vergleichs als zweite Stellgröße Uout eine äquivalente Spannungsamplitude des Elektromotors 1 erzeugt.

Die dargestellte Ausführung stellt somit eine Erweiterung eines einfachen Drehzahlregelkreises mit unterlagertem Stromregler 6 zur Ansteuerung von Elektromotoren 1, insbesondere im Getriebeumfeld oder in einer Applikation für Getriebe von Fahrzeugen, dar, welche es ermöglicht, eine Begrenzung des Summenstromes $I_{DC\_ist}$ und eines äquivalenten Phasenstromeffektivwerts des Elektromotors 1 zu realisieren, wobei als Regelgröße lediglich der einfach zu messende Summenstrom $I_{DC\_ist}$ der B6-Brücke 3 verwendet wird.

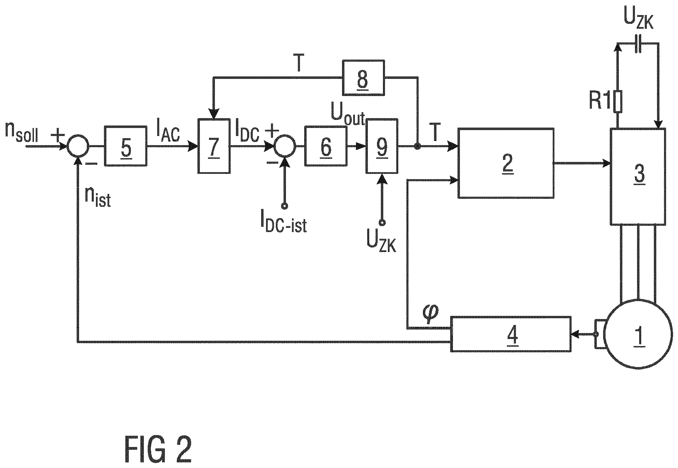

In Figur 2 ist in einem Blockschaltbild ein mögliches zweites Ausführungsbeispiel des Regelkreises zur Ansteuerung des Elektromotors 1 dargestellt.

Im Unterschied zu dem in Figur 1 dargestellten ersten Ausführungsbeispiel wird der Tastgrad T in einer Division der am Ausgang des Stromreglers 6 anliegenden zweiten Stellgröße $U_{out}$ durch eine maximal an der B6-Brücke 3 zur Verfügung stehende Zwischenkreisspannung $U_{ZK}$ gebildet. Diese Zwischenkreisspannung $U_{ZK}$ wird zur Erreichung einer hohen Messgenauigkeit unmittelbar an der B6-Brücke 3 ermittelt, da für gewöhnlich Leitungswege und elektrische Bauteile bei hohen Strömen einen hohen Spannungsabfall bewirken. Der Summenstrom Ioc_ist einer" beispielsweise als B6-Brücke 3 ausgebildeten Endstufe wird ebenfalls an der B6-Brücke 3 an einem elektrischen Widerstand R1 ermittelt.

Durch Rückführung des derart berechneten, aktuellen Tastgrads T der Modulation in die Multiplikation am Ausgang des Drehzahlreglers 5 stehen für eine getrennte Regelung sowie Limitierung die Größen des Summenstromes $I_{DC\_ist}$ der B6-Brücke 3 und eines äquivalenten Phasenstromeffektivwertes als erste Stellgröße $I_{AC}$ zur Verfügung. Der Summenstrom $I_{DC\_ist}$ wird im dargestellten Ausführungsbeispiel als Sollgröße $I_{DC}$ für den unterlagerten Stromregler 6 verwendet.

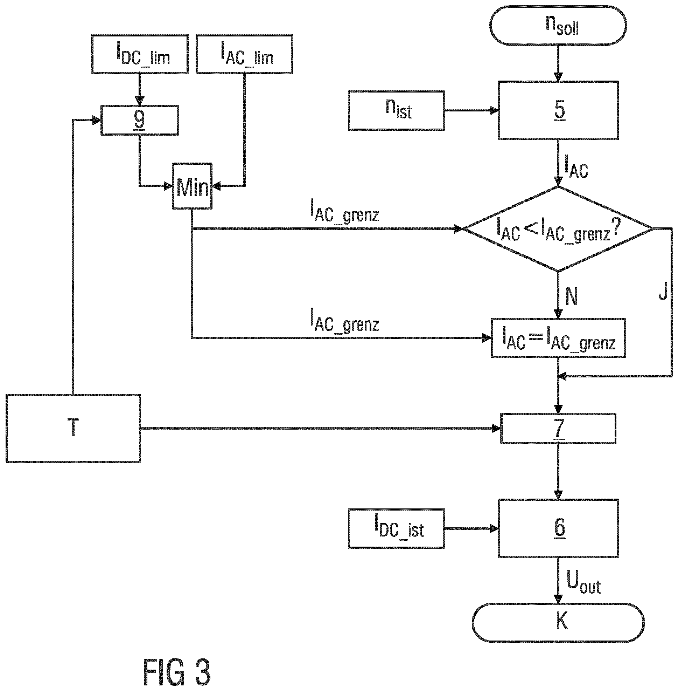

Figur 3 zeigt ein Flussdiagramm eines möglichen Ausführungsbeispiels des erfindungsgemäßen Verfahrens mit detaillierter Darstellung einer Limitierung der ersten Stellgröße $I_{AC}$ des Drehzahlreglers 5 sowie des Sollwerts $I_{DC}$, indem ein Summenstromlimit $I_{DC\_grenz}$ in ein Stromlimit $I_{AC\_grenz}$ für die erste Stellgröße $I_{AC}$ umgerechnet wird.

Hierzu werden Grenzwerte $I_{DC\_lim}$, $I_{Ac\_lim}$ für die erste Stellgröße $I_{AC}$ und den Sollwert $I_{DC}$ erzeugt, wobei der Grenzwert $I_{DC\_lim}$ für den Sollwert $I_{DC}$ gemeinsam mit dem aktuellen Tastgrad T dem Teiler 9 zugeführt wird. Aus dem Ergebnis der Division und dem Grenzwert $I_{Ac\_lim}$ für die erste Stellgröße $I_{AC}$ wird in einer Minimumbildung Min ein Stromlimit $I_{AC\_grenz}$ ermittelt.

Die erste Stellgröße $I_{AC}$ wird mit diesem Stromlimit $L_{AC\_grenz}$ verglichen, wobei in Abhängigkeit des Ergebnisses dieses Vergleichs unterschiedliche, durch die Bezugszeichen J und N gekennzeichnete Wege im Flussdiagramm gewählt werden. Ist die erste Stellgröße $I_{AC}$ größer als das Stromlimit $L_{AC\_grenz}$, wird die erste Stellgröße $I_{AC}$ auf den Wert des Stromlimits $L_{AC\_grenz}$ eingestellt.

Somit wird die erste Stellgröße $I_{AC}$ vor der Multiplikation mit dem Tastgrad T der Modulation derart limitiert, dass diese maximal den Wert des Stromlimits $I_{AC\_grenz}$ aufweist, wobei die Kommutierung K mittels der Steuereinheit 2 und der B6-Brücke 3 in Abhängigkeit der Limitierung durchgeführt wird.

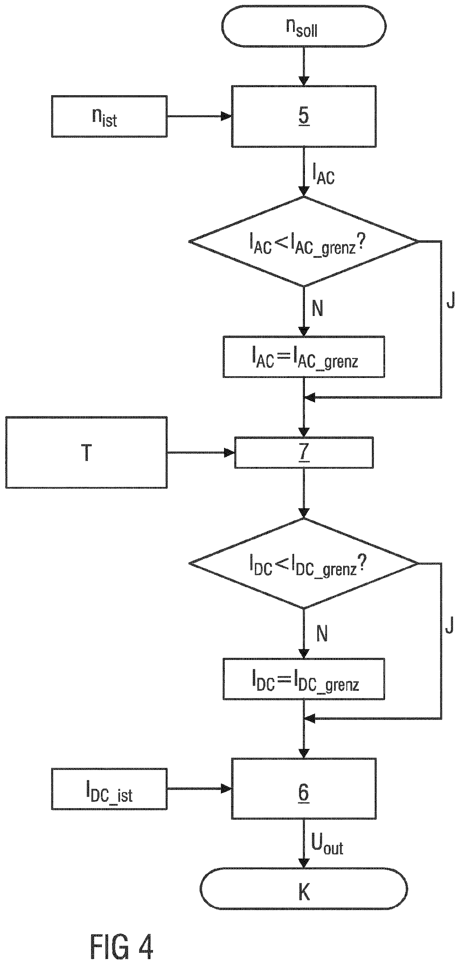

In Figur 4 ist ein Flussdiagramm eines möglichen Ausführungsbeispiels des erfindungsgemäßen Verfahrens dargestellt. Im Unterschied zu dem in Figur 3 dargestellten Ausführungsbeispiel werden die Limitierung der ersten Stellgröße $I_{AC}$ des Drehzahlreglers 5 und die Limitierung des Sollwerts $I_{DC}$ des Summenstromes $I_{DC\_ist}$ unabhängig voneinander durchgeführt.

Hierbei wird zunächst die erste Stellgröße $I_{AC}$ auf das Stromlimit $I_{AC\_grenz}$ begrenzt, bevor überprüft wird, ob der Sollwert $I_{DC}$ kleiner als ein aus dem Grenzwert $I_{DC\_\mu m}$ erzeugtes Summenstromlimit $I_{DC\_grenz}$ ist. Ist dies nicht der Fall, wird der Sollwert $I_{DC}$ auf den Wert des Summenstromlimits $I_{DC\_grenz}$ eingestellt.

Somit werden die erste Stellgröße $I_{AC}$ vor der Multiplikation mit dem Tastgrad T der Modulation und der Sollwert $I_{DC}$ des Summenstromes $I_{DC\_ist}$ vor der Division durch die Zwischenkreisspannung $U_{ZK}$ derart limitiert, dass die erste Stellgröße $I_{AC}$ maximal den Wert des Stromlimits $I_{AC\_grenz}$ und der Sollwert $I_{DC}$ maximal den Wert des Summenstromlimits $I_{DC\_grenz}$ aufweist, wobei die Kommutierung K mittels der Steuereinheit 2 und der B6-Brücke 3 in Abhängigkeit der Limitierungen durchgeführt wird.

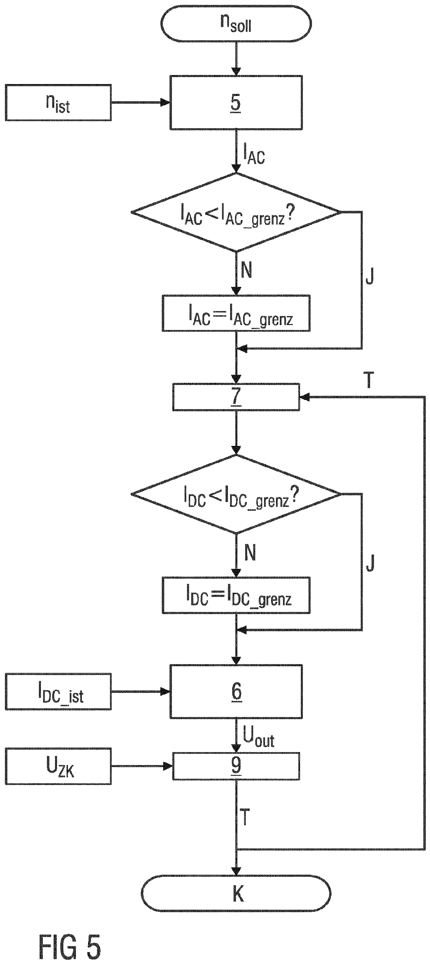

Figur 5 zeigt ein Flussdiagramm eines möglichen Ausführungsbeispiels des erfindungsgemäßen Verfahrens, wobei zusätzlich zu der in Figur 4 gezeigten Darstellung die Erzeugung des Tastgrades T durch Division der zweiten Stellgröße $U_{out}$ durch die Zwischenkreisspannung $U_{ZK}$ dargestellt ist.

Bezugszeichenliste

1    Elektromotor
2    Steuereinheit
3    B6-Brücke
4    Erfassungseinheit
5    Drehzahlregler
6    Stromregler
7    Multiplikator
8    Signalaufbereitungseinheit
9    Teiler

IAC         erste Stellgröße
$I_{AC\_grenz}$   Stromlimit
$I_{Ac\_lim}$    Grenzwert
$I_{DC}$       Sollwert
$I_{DC\_grenz}$   Summenstromlimit

| $I_{Dc\_ist}$ | Summenstrom |
|---|---|
| $I_{DC\_lim}$ | Grenzwert |
| J | Ja |
| K | Kommutierung |
| Min | Minimumbildung |
| N | Nein |
| nist | Ist-Drehzahl |
| $n_{soll}$ | Soll-Drehzahl |
| R1 | Widerstand |
| T | Tastgrad |
| Uout | zweite Stellgröße |
| $U_{ZK}$ | Zwischenkreisspannung |
| φ | Rotorlagewinkel |

**Patentansprüche**

1. Verfahren zur Steuerung eines Betriebs eines Elektromotors (1), wobei in einer Modulation an elektrischen Phasen des Elektromotors (1) anliegende elektrische Spannungen

   - in Abhängigkeit einer Rotorposition des Elektromotors (1),
   - in Abhängigkeit eines in einem Regelkreis mit eines Drehzahlreglers (5) durchgeführten Soll-Ist-Vergleichs einer Drehzahl des Elektromotors (1) und
   - in Abhängigkeit eines in einem dem Drehzahlregler (5) unterlagerten Stromregler (6) durchgeführten Soll-Ist-Vergleichs eines an einer elektrischen Versorgungseinheit des Elektromotors (1) gemessenen Summenstromes ($I_{DC\_ist}$) erzeugt und gesteuert ausgegeben werden,
   - wobei ein Sollwert ($I_{DC}$) am Eingang des Stromreglers (6) durch Multiplikation eines aktuellen Tastgrades (T) der Modulation mit einer am Ausgang des Drehzahlreglers (5) anliegenden und als äquivalenter Phasenstrom des Elektromotors (1) ausgebildeten ersten Stellgröße ($I_{AC}$) gebildet wird,
   - wobei die erste Stellgröße ($I_{AC}$) des Drehzahlreglers (5) im unterlagerten Stromregler (6) aufgrund der mittels eines am Ausgang des Drehzahlreglers (5) angeordneten Multiplikators (7) durchgeführten Multiplikation mit dem aktuellen Tastgrad (T) zu einem äquivalenten Phasenstromeffektivwert des Elektromotors (1) wird,
   - wobei der Tastgrad (T) in einer Division einer am Ausgang des Stromreglers (6) anliegenden zweiten Stellgröße ($U_{out}$) durch eine maximal an der Versorgungseinheit zur Verfügung stehenden Zwischenkreisspannung ($U_{ZK}$) gebildet wird.

2. Verfahren nach Anspruch 1,
   **dadurch gekennzeichnet, dass** als zweite Stellgröße ($U_{out}$) mittels des Stromreglers (6) eine äquivalente Spannungsamplitude des Elektromotors (1) erzeugt wird.

3. Verfahren nach einem der vorhergehenden Ansprüche, **dadurch gekennzeichnet, dass** die erste Stellgröße ($I_{AC}$) vor der Multiplikation mit dem Tastgrad (T) der Modulation limitiert wird.

4. Verfahren nach einem der vorhergehenden Ansprüche, **dadurch gekennzeichnet, dass** der Sollwert ($I_{DC}$) limitiert wird.

5. Verfahren nach Anspruch 4,
   **dadurch gekennzeichnet, dass** die Limitierung des Sollwerts ($I_{DC}$) vor der Multiplikation des aktuellen Tastgrades (T) der Modulation mit der am Ausgang des Drehzahlreglers (5) anliegenden ersten Stellgröße ($I_{AC}$) durch Umrechnung eines Summenstromlimits ($I_{DC\_grenz}$) in ein äquivalentes Stromlimit ($I_{AC\_grenz}$) mittels Division mit dem aktuellen Tastgrad (T) erfolgt.

6. Verfahren nach einem der vorhergehenden Ansprüche, **dadurch gekennzeichnet, dass** die Spannungen in Abhängigkeit eines eine Rotorposition des Elektromotors (1) kennzeichnenden Rotorlagewinkels (φ) in einer Raumzeigermodulation ermittelt werden.

7. Vorrichtung zur Steuerung eines Betriebs eines Elektromotors (1),

- umfassend eine elektrische Versorgungseinheit zur gesteuerten Ausgabe von elektrischen Spannungen an elektrischen Phasen des Elektromotors (1),
- wobei die Versorgungseinheit mit zumindest einer Erfassungseinheit (4) zur Erfassung einer Rotorposition des Elektromotors (1) und
- zumindest einem in einem Regelkreis angeordneten Drehzahlregler (5) zur Durchführung eines Soll-Ist-Vergleichs einer Drehzahl des Elektromotors (1) gekoppelt ist,
- wobei dem Drehzahlregler(5) ein Stromregler (6) zur Durchführung eines Soll-Ist-Vergleichs eines an der Versorgungseinheit gemessenen Summenstromes ($I_{DC\_ist}$) unterlagert ist,
- wobei am Ausgang des Drehzahlreglers (5) ein Multiplikator (7) angeordnet ist, mittels welchem ein Sollwert ($I_{DC}$) am Eingang des Stromreglers (6) durch Multiplikation eines aktuellen Tastgrades (T) der Modulation mit einer am Ausgang des Drehzahlreglers (5) anliegenden und als äquivalenter Phasenstrom des Elektromotors (1) ausgebildeten ersten Stellgröße ($I_{AC}$) erzeugbar ist, so dass die erste Stellgröße ($I_{AC}$) des Drehzahlreglers (5) im unterlagerten Stromregler (6) aufgrund der mittels des Multiplikators (7) durchgeführten Multiplikation mit dem aktuellen Tastgrad (T) zu einem äquivalenten Phasenstromeffektivwert des Elektromotors (1) wird,
- wobei am Ausgang des Stromreglers (6) ein Teiler (9) angeordnet ist, mittels welchem der Tastgrad (T) durch Division einer am Ausgang des Stromreglers (6) anliegenden zweiten Stellgröße ($U_{out}$) durch eine maximal an der Versorgungseinheit zur Verfügung stehende Zwischenkreisspannung ($U_{ZK}$) erzeugbar ist.

**8.** Vorrichtung nach Anspruch 7,
**dadurch gekennzeichnet, dass** die zweite Stellgröße ($U_{out}$) eine äquivalente Spannungsamplitude des Elektromotors (1) ist.

**9.** Vorrichtung nach Anspruch 7 oder 8,
**dadurch gekennzeichnet, dass** die Versorgungseinheit eine Brückenschaltung umfasst.

**10.** Vorrichtung nach Anspruch 9,
**dadurch gekennzeichnet, dass** die Brückenschaltung eine B6-Brückenschaltung ist.

**Claims**

**1.** Method for controlling the operation of an electric motor (1), wherein electrical voltages applied to electrical phases of the electric motor (1) are generated and output in a controlled manner in a modulation

- on the basis of a rotor position of the electric motor (1),
- on the basis of a setpoint/actual comparison of a speed of the electric motor (1) executed in a control loop by a speed controller (5),
- on the basis of a setpoint/actual comparison of a total current ($I_{DC\_actual}$) measured on an electric power supply unit of the electric motor (1) executed by a current regulator (6) which is subordinate to the speed controller (5),
- wherein a setpoint value ($I_{DC}$) at the input of the current regulator (6) is formed by multiplying a present duty factor (T) for modulation by a first manipulated variable ($I_{AC}$) applied to the output of the speed controller (5) and in the form of an equivalent phase current of the electric motor (1),
- wherein the first manipulated variable ($I_{AC}$) of the speed controller (5) becomes an equivalent phase current RMS value for the electric motor (1) in the subordinate current regulator (6), by means of multiplication, executed by a multiplier (7) arranged on the output of the speed controller (5), by the present duty factor (T),
- wherein the duty factor (T), by the division of a second manipulated variable ($U_{out}$) applied to the output of the current regulator (6), is constituted by a maximum intermediate circuit voltage ($U_{ZK}$) available on the power supply unit.

**2.** Method according to Claim 1,
**characterized in that** an equivalent voltage amplitude of the electric motor (1) is generated as a second manipulated variable ($U_{out}$) by the current regulator (6).

**3.** Method according to either of the preceding claims, **characterized in that** the first manipulated variable ($I_{AC}$) is limited prior to multiplication by the duty factor (T) for modulation.

**4.** Method according to one of the preceding claims, **characterized in that** the setpoint value ($I_{DC}$) is limited.

**5.** Method according to Claim 4,
**characterized in that** the limitation of the setpoint value ($I_{DC}$), prior to the multiplication of the present duty factor (T) for modulation by the first manipulated variable ($I_{AC}$) on the output of the speed controller (5), is executed by the conversion of a total current limit ($I_{DC\_limit}$) into an equivalent current limit ($I_{AC\_limit}$) by division by the present duty factor (T).

**6.** Method according to one of the preceding claims, **characterized in that** voltages are determined with reference to a rotor position angle ($\varphi$), which is characteristic of a rotor position of the electric motor (1), in a space vector modulation.

**7.** Device for controlling the operation of an electric motor (1),

- comprising an electric power supply unit for the controlled output of electric voltages on electrical phases of the electric motor (1),
- wherein the power supply unit is coupled to at least one detection unit (4) for the detection of a rotor position of the electric motor (1), and
- to at least one speed controller (5), arranged in a control loop, for the execution of a setpoint/actual comparison of a speed of the electric motor (1),
- wherein a current regulator (6) is subordinate to the speed controller (5) for the execution of setpoint/actual comparison of a total current ($I_{DC\_actual}$) measured on the power supply unit,
- wherein a multiplier (7) is arranged on the output of the speed controller (5), by means of which a setpoint value ($I_{DC}$) on the input of the current regulator (6) is able to be generated by multiplying a present duty factor (T) for modulation by a first manipulated variable ($I_{AC}$) applied on the output of the speed controller (5) and in the form of an equivalent phase current of the electric motor (1), such that the first manipulated variable ($I_{AC}$) of the speed controller (5), by means of multiplication, executed by the multiplier (7), by the present duty factor (T) in the subordinate current regulator (6), becomes an equivalent phase current RMS value of the electric motor (1),
- wherein a divider (9) is arranged on the output of the current regulator (6), by means of which the duty factor (T) is able to be generated by the division of a second manipulated variable ($U_{out}$) applied to the output of the current regulator (6) by a maximum intermediate circuit voltage ($U_{ZK}$) available on the power supply unit.

**8.** Device according to Claim 7,
**characterized in that** the second manipulated variable ($U_{out}$) is an equivalent voltage amplitude of the electric motor (1).

**9.** Device according to either of Claims 7 and 8,
**characterized in that** the power supply unit incorporates a bridge circuit.

**10.** Device according to Claim 9, **characterized in that** the bridge circuit is a B6 bridge circuit.

**Revendications**

**1.** Procédé de commande du fonctionnement d'un moteur électrique (1), des tensions électriques appliquées aux phases électriques du moteur électrique {1} dans une modulation étant délivrées en étant générées et commandées

- en fonction de la position du rotor du moteur électrique (1) ,
- en fonction d'une comparaison consigne-réel de la vitesse de rotation du moteur électrique (1) effectuée dans une boucle de régulation pourvue d'un régulateur de vitesse de rotation (5) et
- en fonction d'une comparaison consigne-réel d'un courant total ($I_{DC\_réel}$) mesuré au niveau d'une unité d'alimentation électrique du moteur électrique (1), la comparaison étant effectuée dans un régulateur de courant (6) subordonné au régulateur de vitesse de rotation (5),
- une valeur de consigne ($I_{DC}$) à l'entrée du régulateur de courant (6) étant formée par multiplication d'un rapport cyclique actuel (T) de la modulation par une première grandeur de réglage ($I_{AC}$) qui est présente à la sortie du régulateur de vitesse de rotation (5) et qui est conçue en tant que courant de phase équivalent du moteur électrique (1),
- la première grandeur de réglage ($I_{AC}$) du régulateur de vitesse de rotation (5) dans le régulateur de courant subordonné (6) devenant une valeur efficace de courant de phase équivalente du moteur électrique (1) en raison de la multiplication, effectuée au moyen d'un multiplicateur (7) disposé à la sortie du régulateur de vitesse de rotation (5), par le rapport cyclique actuel (T),

- le rapport cyclique (T) étant formé par division d'une deuxième grandeur de réglage ($U_{out}$), présente à la sortie du régulateur de courant (6), par une tension de circuit intermédiaire ($U_{ZK}$) maximale disponible au niveau de l'unité d'alimentation.

2. Procédé selon la revendication 1,
   **caractérisé en ce qu'**une amplitude de tension équivalente du moteur électrique (1) est générée en tant que deuxième grandeur de réglage ($U_{out}$) au moyen du régulateur de courant (6).

3. Procédé selon l'une des revendications précédentes, **caractérisé en ce que** la première grandeur de réglage ($I_{AC}$) est limitée avant multiplication par le rapport cyclique (T) de la modulation.

4. Procédé selon l'une des revendications précédentes, **caractérisé en ce que** la valeur de consigne ($I_{DC}$) est limitée.

5. Procédé selon la revendication 4,
   **caractérisé en ce que** la limitation de la valeur de consigne ($I_{DC}$) est effectuée par conversion d'une limite de courant total ($I_{DC\_limite}$) en une limite de courant équivalente ($I_{AC\_limite}$) par division avec le rapport cyclique actuel (T) avant la multiplication du rapport cyclique actuel (T) de la modulation par la première grandeur de réglage ($I_{AC}$) présente à la sortie du régulateur de vitesse de rotation (5).

6. Procédé selon l'une des revendications précédentes, **caractérisé en ce que** les tensions sont déterminées en fonction d'un angle de position de rotor ($\varphi$), caractérisant la position du rotor du moteur électrique (1), dans une modulation vectorielle spatiale.

7. Dispositif de commande d'un fonctionnement d'un moteur électrique (1),

   - comprenant une unité d'alimentation électrique destinée à délivrer en sortie de manière commandée des tensions électriques au niveau des phases électriques du moteur électrique (1),
   - l'unité d'alimentation étant accouplée à au moins une unité de détection (4) destinée à détecter une position de rotor du moteur électrique (1) et
   - à au moins un régulateur de vitesse de rotation (5) disposé dans une boucle de commande pour effectuer une comparaison consigne-réel de la vitesse de rotation du moteur électrique (1),
   - le régulateur de vitesse de rotation (5) étant subordonné à un régulateur de courant (6) pour effectuer une comparaison consigne/réel d'un courant total ($I_{DC\_réel}$) mesuré au niveau de l'unité d'alimentation,
   - un multiplicateur (7) étant disposé à la sortie du régulateur de vitesse de rotation (5) et permettant de générer une valeur de consigne ($I_{DC}$) à l'entrée du régulateur de courant (6) par multiplication d'un rapport cyclique actuel (T) de la modulation par une première grandeur de consigne ($I_{AC}$) présente à la sortie du régulateur de vitesse de rotation (5) et conçue en tant que courant de phase équivalent du moteur électrique (1) de sorte que la première grandeur de régulation ($I_{AC}$) du régulateur de vitesse de rotation (5) dans le régulateur de courant subordonné (6) devient une valeur efficace de courant de phase équivalente du moteur électrique (1) en raison de la multiplication, effectuée au moyen du multiplicateur (7), par le rapport cyclique actuel (T),
   - un diviseur (9) étant disposé en sortie du régulateur de courant (6) et permettant de générer le rapport cyclique (T) par division d'une deuxième grandeur de consigne ($U_{out}$), présente à la sortie du régulateur de courant (6), par une tension de circuit intermédiaire maximale ($U_{ZK}$) disponible au niveau de l'unité d'alimentation.

8. Dispositif selon la revendication 7,
   **caractérisé en ce que** la deuxième grandeur de réglage ($U_{out}$) est une amplitude de tension équivalente du moteur électrique (1).

9. Dispositif selon la revendication 7 ou 8,
   **caractérisé en ce que** l'unité d'alimentation comprend un circuit en pont.

10. Dispositif selon la revendication 9,
    **caractérisé en ce que** le circuit en pont est un circuit en pont B6.

FIG 1

FIG 2

FIG 3

$n_{soll}$

$n_{ist}$

**5**

$I_{AC}$

$I_{AC} < I_{AC\_grenz}$?

J

N

$I_{AC} = I_{AC\_grenz}$

T

**7**

$I_{DC} < I_{DC\_grenz}$?

J

N

$I_{DC} = I_{DC\_grenz}$

$I_{DC\_ist}$

**6**

$U_{out}$

K

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008265829 A1
- US 5519301 A
- US 20130158808 A1
- EP 1981164 A2